# EUROPEAN PATENT SPECIFICATION

(11) **EP 4 012 440 B1**
(45) Date of publication and mention of the grant of the patent: **14.08.2024**
(21) Application number: 20213749.3
(22) Date of filing: 14.12.2020
(51) Int. Cl.: G01S 7/41, G01S 7/48, G01S 13/86, G01S 17/08, G01S 17/86, G01S 17/89, G01S 17/931, G01S 13/34, G01S 13/87, G01S 13/931, G01S 15/931, G01S 7/497, G01S 17/87, G06V 10/80, G06V 20/56, G06N 3/08

(54) **METHOD FOR EXTENDING THE EFFECTIVE RANGE OF A SENSOR AND A CORRESPONDING SENSOR SYSTEM**
VERFAHREN ZUR ERWEITERUNG DES EFFEKTIVEN BEREICHS EINES SENSORS UND ENTSPRECHENDES SENSORSYSTEM
PROCÉDÉ D'EXTENSION DE LA PLAGE EFFECTIVE D'UN CAPTEUR ET SYSTÈME DE CAPTEUR CORRESPONDANT

(43) Date of publication of application: 15.06.2022
(73) Proprietor: Continental Autonomous Mobility Germany GmbH, 85057 Ingolstadt (DE)
(72) Inventor: Kabai, Robert-Zsolt, 90411 Nürnberg (DE)
(74) Representative: Continental Corporation

(56) References cited:
- US-A1- 2020 210 726
- NAVA MIRKO ET AL: "Learning Long-Range Perception Using Self-Supervision From Short-Range Sensors and Odometry", IEEE ROBOTICS AND AUTOMATION LETTERS, IEEE, vol. 4, no. 2, 1 April 2019 (2019-04-01), pages 1279 - 1286, XP011711131, DOI: 10.1109/LRA.2019.2894849

## Description

The present invention relates to a method for extending the effective range of a short-range sensor and a production vehicle with a short-range sensor, which is adapted to extend a detection range of the short-range sensor based on a method according to the invention.

### Technical background

Modern means of transportation such as motor vehicles or motorcycles are increasingly outfitted with driver assistance systems which sense the surroundings by means of sensor systems, recognize traffic situations and assist the driver, e.g. by braking action or steering action or by emitting an optical or acoustical warning. Radar sensors, lidar sensors, camera sensors or the like are generally used as sensor systems for detecting surroundings. Inferences about the surroundings can subsequently be drawn from the sensor data determined by the sensors, e.g. so that an object classification and/or surroundings classification or an environment model can be prepared. Furthermore, detection of surroundings is virtually indispensable in the field of (semi-)autonomous driving so that there is a particular interest in advancing and further developing the corresponding systems. Furthermore, curve detection based on object detection is very important precisely in the field of (semi-)autonomous driving because it is very difficult to implement autonomous planning of trajectories along the route without curve detection of this kind.

Perception models for autonomous driving use various sensors including Cameras, lidar sensors and radar sensors. As each type of sensor has highly different characteristics and supply very different information about the vehicle's surroundings fusion techniques are sometimes applied to merge the extracted information from all. Most fusion techniques used rely on what's called "late fusion" where each sensor's information is processed individually and the extracted semantic information from all of them are merged with sensor fusion e.g. Kalman Filters at a later stage. Such techniques are robust for individual sensor failure, but many times suffer from the drawbacks of each individual sensor. In lidar super-resolution setups, the lidar and Camera information is fused at an early stage to enhance the typically low resolution of the lidar unit. A big drawback of some lidar sensors is the limited measurement range, for example approximately 20 m, which makes its use very limited thus it makes it impossible to safely use in driving scenarios involving importance long-range or highspeed scenarios. In the case of high speeds there would be not enough response time for the vehicle if an object approaches the vehicle with highspeed and is invisible for the lidar sensor for up to the last short time period.

### Published prior art

In "RegNet: Multimodal Sensor Registration Using Deep Neural Networks" (N. Schneider et al.; 2017) a deep convolutional neural network (CNN) is presented which infers a 6 degrees of freedom (DOF) extrinsic calibration between multimodal sensors, exemplified using a scanning lidar and a monocular camera. The CNN casts all three conventional calibration steps (feature extraction, feature matching and global regression) into a single real-time capable CNN, wherein the described method does not require any human interaction and bridges the gap between classical offline and target-less online calibration approaches as it provides both a stable initial estimation as well as a continuous online correction of the extrinsic parameters. During training it is suggested to randomly decalibrate the system in order to train the CNN to infer the correspondence between projected depth measurements and RGB image and finally regress the extrinsic calibration.

US 2020/210726 A1 discloses a distance to obstacle detection in autonomous machine applications, wherein a deep neural network (DNN) is trained to accurately predict, in deployment, distances to objects and obstacles using image data alone. The DNN may be trained with ground truth data that is generated and encoded using sensor data from any number of depth predicting sensors, such as, without limitation, RADAR sensors, LIDAR sensors, and/or SONAR sensors. Camera adaptation algorithms may be used to adapt the DNN for use with image data generated by cameras with varying parameters-such as varying fields of view.

Furthermore in NAVA MIRKO ET AL: "Learning Long-Range Perception Using Self-Supervision From Short-Range Sensors and Odometry" (IEEE ROBOTICS AND AUTOMATION LETTERS, IEEE, vol. 4, no. 2, 1 April 2019 (2019-04-01), pages 1279-1286, XP011711131, DOI: 10.1109/LRA.2019.2894849 [retrieved on 2019-02-18]) a general self-supervised approach is described to predict the future outputs of a short-range sensor (such as a proximity sensor) given the current outputs of a long-range sensor (such as a camera).

### Object of the present invention

The object of the present invention is to provide a novel method for a sensor of a vehicle with which the effective range of the sensor is improved in a simple and economical manner.

### Achieving the object

The above-stated object is achieved by the contents of claim 1 and claim 9.

Expedient configurations of the invention are claimed in the subclaims.

The invention proposes a method for lidar range enhancement using Deep Learning methods and a combination of supplemental sensors which are different in the training setup and the inference (production vehicle) setup. The proposed method is preferably a computer-implemented method for extending the effective range of a short-range sensor, wherein the method comprises a first sensor setup for a vehicle (production vehicle), comprising a short-range sensor and at least one long-range auxiliary sensor which provides an anchor point measurement. Furthermore a second sensor setup for a training vehicle is arranged, comprising a short-range sensor, a long-range auxiliary sensor which provides an anchor point measurement and a long-range ground truth sensor, wherein the sensors of first and second sensor setup having a sensor range and providing sensor data for reflection/object detection, the range extension is done with a neural network, wherein the neural network is trained using following steps: detecting reflections, hits or objects in the surrounding of the training vehicle by using sensor data of second sensor setup, determining an anchor point of an reflection or object which is out of a effective range of short-range sensor of second sensor setup by using anchor point measurement of long-range auxiliary sensor of second sensor setup, providing ground truth by determining the distances between the anchor point and the other reflections or objects by using the sensor data of long-range ground truth sensor. The method is executed on basis of the neural network using following steps: detecting reflections or objects in the surrounding of the training vehicle by using sensor data of second sensor setup, determining an anchor point of an reflection or object which can be out of or in a effective range of short-range sensor of first sensor setup by using anchor point measurement of long-range auxiliary sensor of first sensor setup, determining the distances between the anchor point and other reflections/objects in the effective range of short-range sensor by using the sensor data of short-range sensor and inferring the distances between the anchor point and other reflections/objects out of the effective range of short-range sensor of the first sensor setup by using the provided ground truth of the trained neural network. The method solves the challenges in situations of reflections/objects being outside of the range of the short-range lidar mounted on the vehicle. The invention also enables a cost-sensitive sensor setup for production cars as range-extension makes the production vehicle be able to use a less expensive short-range lidar in cooperation with cost effective complementary sensors reconstruct the 3D environment around the vehicle even up to long ranges, which is traditionally only possible using costly and elaborate lidars. According to a preferred embodiment of the invention the short-range sensor in the first and/or the second sensor setup is a short-range lidar sensor, preferably a short-range flash lidar sensor.

Furthermore, the long-range auxiliary sensor which provides an anchor point measurement in the first and/or the second sensor setup can be a radar sensor or a long-range lidar sensor. Preferably the long-range auxiliary sensor comprises a single-beam or a multi-beam configuration.

According to a preferred embodiment of the invention the first sensor setup and/or the second sensor setup can comprise a camera, wherein the camera provides images and/or pixels as sensor data which are also used as input for the neural network.

Furthermore, the neural network can infer the location of camera pixels which have no other input sensor data or anchor point measurement associated.

Preferably the long-range ground truth sensor is a long-range ground truth lidar sensor capable of wide field of view and long-range measurements.

In addition, a sensor fusion of sensor data of the sensors of first sensor setup (e.g. short-range sensor, long-range auxiliary sensor and camera) can be done to enhance the reflection/object detection.

Furthermore the present invention claims a production vehicle with a short-range sensor, a long-range auxiliary sensor and a control unit, wherein the production vehicle is adapted to extend an effective range of the short-range sensor based on a method according to the invention.

The short-range sensor is preferably a short-range lidar sensor in particular a short-range flash lidar sensor and the long-range auxiliary sensor is a (long-range) radar sensor or a long-range lidar sensor.

Furthermore, the production vehicle can comprise a camera, wherein the camera provides images or pixels as sensor data for reflection/object detection. The camera can be used for a kind of fusion between camera and lidar/radar sensor. Sparse anchor points and dense image textures can be used for dense distance predictions.

According to a practical embodiment the sensors of the production vehicle can be arranged together with the camera in one physical housing to create a kind of compact sensor combination. As a result, installation space requirements can be reduced to a particular degree.

The short-range lidar sensor and the long-range lidar sensor and/or the camera can also have the same frame rate. In a practical manner the camera and the flash lidar frame rate synchronization is already carried out in the factory process.

The present invention can be implemented as a computer program with program code which is executed in a computer or other programmable computing means (e. g. a computing device comprising a processor, microcontroller or the like) known from the art.

The present invention additionally comprises a computer-readable storage medium which comprises instructions which prompt the computer on which they are executed to carry out a method according to the invention.

Surprisingly, it has been further shown that the present invention is also applicable to other sensor types, e.g. camera sensors, lidar sensors or ultrasound sensors, when suitable input data are used and the training is adapted to the latter in a corresponding manner. Furthermore, the invention can be used in the field of Semantic Segmentation, Lost Cargo Detection, Emergency Breaking and other important functions for autonomous driving.

Within the meaning of the invention, the term "effective range" describes the range within any "useful" measurable information is returned. Common lidar sensors have two types of ranges, a maximum range and a (effective) range given at x percent albedo (in particular at 10 % albedo). The effective range (at x % albedo) is the relevant range for the described method - the physical maximum range is not relevant here, because the returned signals here are too weak to register and measure. Furthermore, a detection algorithm, a semantic segmentation or pose estimation or other final tasks can be used later on to improve the detection range, the object detection and so on.

Within the meaning of the invention sensors are distinguished by their range sensor-ranges. For example, there are short-range and long-range sensors, wherein short-range sensors comprising an (effective) range up to 20 m, preferably up to 25 m or preferably up to 30 m (For example High Flash Lidar Sensors with a range up to 20 m at 10 % albedo). Both the high-resolution ground truth sensor and the single beam sensor could be a long-range sensor depending on the desired final range extension of the short-range sensor. Long-range lidars can contain information up to 120 m and single (or low # multi-)beam additional beam lasers can be used with an effective range of 40 m for a 40 m extension of a short-range sensor with 20 m effective range or laser with a 80 m effective range for a 80m extension of a short-range sensor with 20 m effective range. In other words, about 30 m or less is short-range more than 30 m is long-range. Furthermore, the invention can also be used for extending the effective range of a sensor with an effective range with more than 30 m by using sensors as long-range sensor and long-range ground truth sensor with much higher effective ranges (e.g. long-range sensor with an effective range of 120 m or 150 m can be used for a 120 m or 150 m extension of a sensor with effective range of 50 m.

Within the meaning of the invention, the term "artificial intelligence" (Al) includes technologies which are capable of solving problems that normally require a kind of "human intelligence".

Within the meaning of the invention, the term "machine learning" (ML) describes the use of algorithms to analyze data, to learn from these data and to then make a determination or prediction about something (not yet visible). In this regard, monitored learning as well as unmonitored learning can be applied. Among other things, the labeling strategy or labeling of data can be critically important for the analysis of the data.

Within the meaning of the invention, the term "training" describes the adaptation of parameters of a model in the field of machine learning such that a previously established erroneous measurement is smaller for the adapted model.

Within the meaning of the invention, the term "deep learning" (DL) includes a cascade of a plurality of layers of nonlinear processing units (mostly artificial neural networks) for extracting and transforming features (or extracting and transforming parameters).

The term "artificial neural network" (ANN) or "convolutional neural network" (CNN) includes networks of artificial neurons which, expressed abstractly, are linked as in a nervous system of a living being with respect to information processing. The neurons can be represented as nodes and their connections as edges in a graph. The rearmost (node) layer of the network is designated as the output layer and "invisible" (node) layers located in front are designated as hidden layers. Artificial neural networks of this kind may be constructed of one layer (one output layer), two layers (an output layer and a hidden layer to improve the abstraction) or multiple layers (at least one output layer and a plurality of hidden layers for improving abstraction). In addition, they can be configured as feed-forward and/or with back-propagated edges (recurrent connections) with respect to their data transmission (feedback network).

The term "Inference" is used to describe a reasoning or a process whereby conclusions can be drawn from given facts and rules. If artificial intelligence (Al) is concerned, it is an application or a system that has been trained with the help of neural networks. These systems are not supposed to "learn", but to apply what they have learned based on inference.

Within the meaning of the invention, the term "computer-implemented method" describes a flow planning or procedure which is realized and carried out based on a data processor. The data processor, e.g. a computer, a computer network or another programmable device known from the prior art, can process data by means of programmable calculation rules. With respect to the method, essential properties can be realized, e.g. by means of a new program, new programs, an algorithm or the like.

### Description of the invention referring to embodiment examples

The invention will be described in more detail in the following referring to expedient embodiment examples. Therein:
- Fig.1a: shows a simplified schematic representation of an embodiment of a training vehicle;
- Fig.1b: shows a simplified schematic representation of an embodiment of a production vehicle;
- Fig. 2a: shows a simplified schematic representation of a detection situation for a singlebeam setup proposal for a production vehicle with a first sensor setup (inference time setup);
- Fig. 2b: shows a simplified schematic representation of a detection situation for a singlebeam setup proposal for a training vehicle with a second sensor setup (recording time or training setup);
- Fig. 3a: shows a simplified schematic representation of a detection situation for a multibeam setup proposal for a production vehicle with a first sensor setup (inference time setup);
- Fig. 3b: shows a simplified schematic representation of a detection situation for a multibeam setup proposal for a training vehicle with a sensor setup (recording time setup), and
- Fig. 4: shows a simplified schematic view of a flow diagram of an inference setup of a production vehicle and the training setup of a recording vehicle.

The invention comprises a method for Neural Network based range extension of a sensor, in particular a short-range lidar sensor, using different complementary sensors for training with a training and an inference (production vehicle) setup. For inference (production vehicle) using a simple and cheaper sensor unit, for example a secondary long-range auxiliary sensor unit (e.g. a single beam lidar or a radar) that provides a small point number (even a single point or up to a few) of Anchor Point measurements for longer distances and a camera providing image information. The complementary long-range auxiliary sensor providing the Anchor Point measurement should have a larger range than the short-range lidar for which the range extension is done. In the case of some radar units have more than one beam thus in that case more than one Anchor Point is used, typically a number between one and ten resulting in a single beam or multiple beams with specific angles between beams. For training setup, the data is recorded using all three previously mentioned sensors (short-range lidar, long-range auxiliary sensor and camera) plus an additional long-range ground truth lidar sensor capable of wide field of view and long-range measurements.

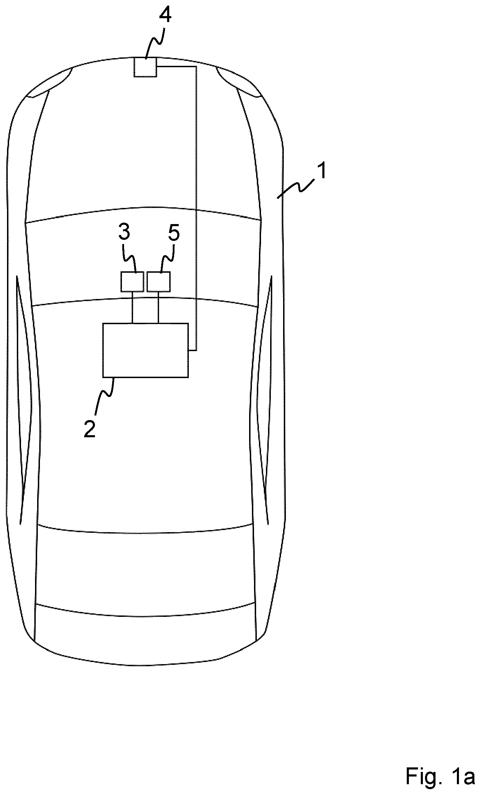

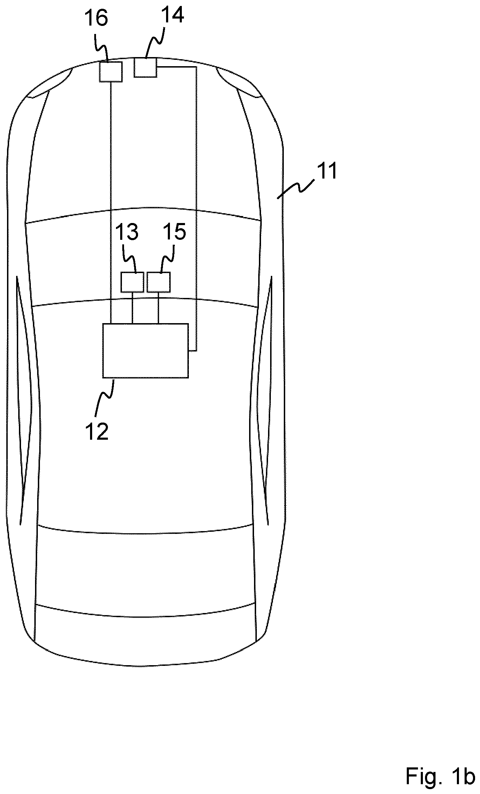

Reference number 1 in Fig. 1 designates a production vehicle having a control unit 2 (ECU, Electronic Control Unit or ADCU, Assisted and Automated Driving Control Unit), by means of which a (partly) automated control of the ego-vehicle 1 can be effected, e.g. in that the control unit 2 can access the actuators (brake, acceleration, steering) of the vehicle 1. Furthermore, the vehicle 1 comprises a first sensor setup (inference setup) and has sensors for capturing the environment: a short-range lidar sensor 3, a long-range radar sensor 4 and a front camera 5, the sensor data of which are utilized for recognizing the environment and objects so that various assistance functions such as e.g. the emergency baking system (EBA, Electronic Brake Assist, Automatic Cruise Control (ACC), Lane Keeping Support or respectively a lane departure warning system (LKA, Lane Keep Assist) or the like can be realized. The short-range lidar can be a (high) flash lidar sensor (HFL) which is a very sensitive sensor that do not require moving parts like rotating mirrors. The flash lidar detects the entire environment of the vehicle by using a single laser flash ("Flash lidar") and comprises for this several special photodiodes (e.g. single-photon avalanche diodes - SPAD), wherein a rectangular measuring field is illuminated - not only one point or a few points are illuminated as in classic lidar sensor setups - so that the flash lidar has a higher resolution than other lidars but also a limited measurement effective range (short-range). The radar sensor 4 is a long-range radar sensor which guarantees capturing of the surroundings even at higher speeds (e.g. by a wide range of > 200 m). According to another preferred embodiment of the invention a low beam count individual static beam lidar can be used instead of radar sensor 4 as long-range auxiliary sensor. Furthermore, distance information is allocated to the detected reflections or objects by means of a radar sensor 4 (distance determination or respectively distance measurement), e.g. on the basis of the configuration of the radar sensor according to a FMCW (Frequency Modulated Continuous Wave) method, by means of doppler radar or the like. The assistance functions are executed via the control unit 2 or respectively the algorithm stored therein. Reference number 11 in Fig. 1b designates a training vehicle having a second sensor setup (training setup) as the production vehicle 1 of Fig. 1a (Control Unit 12, short-range Lidar sensor 13, long-range radar sensor 14 and camera 15) except a long-range ground truth sensor in particular a long-range ground truth lidar sensor which is additionally arranged in training vehicle 11.

Conventional long-range lidars having typically inconveniences like the large size, the mechanical moving parts and the rolling shutter effect and aside this they are normally expensive which makes the sensor economically unfeasible to use on a production vehicle. The invention uses preferably all sensors on the recording car or training vehicle 1b setup for training data of the Neural Network in the following way: The Neural Network uses supervised learning to reconstruct the part of the 3D environment around the vehicle which is normally outside of the range of the short-range lidar 3. The input of the Neural Network comprises the information from the three sensors listed in the production vehicle setup (short-range lidar 3, long-range auxiliary sensor 4 and camera 5). The ground truth of the Neural Network comprises of the information recorded by the expensive wide field of view and long-range lidar and the single (or limited few) beam measurements of the long-range auxiliary sensor (e.g. single beam lidar or radar sensor 4). The long-range ground truth measurements contain all the information for direct distance measurements between reflections/objects around the vehicle, even outside the limited range of the short-range lidar 3.

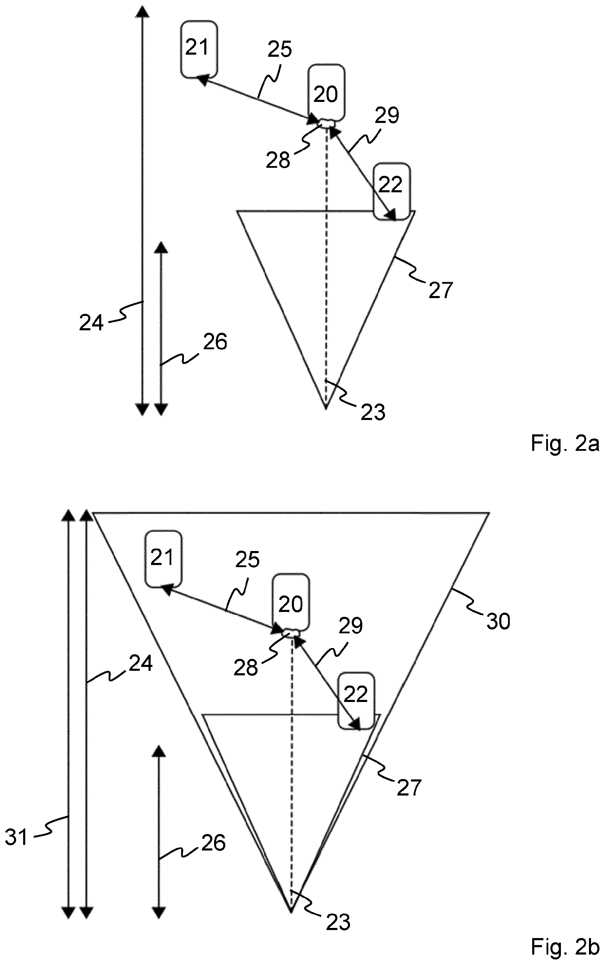

For the input of the Neural Network the short-range lidar provides a number of denser, more detailed 3D measurements up to the sensor's range, and only a very few (even a single) long-range beam measurement coming from the complementary sensor used as 3D Anchor Point(s) possibly outside of the short-range lidar's range, especially if multiple beams and thus Anchor Points are provided. All Anchor Points (and all short-range lidar measurements) provide a fixed measurement for a subset of the real world surrounding the vehicle in both recording and production setups, as shown in Fig. 2a (interference time setup for production vehicle 1) and Fig. 2b (recording time setup for training vehicle 11). In Fig. 2a and 2b Reference numbers 20, 21, 22 designate reflections (hits or objects) detected by the sensor system. The single lidar (or radar) beam 23 is send by radar sensor (single/multi beam long-range lidar/radar) with effective range 24. The Neural Network infers the location of camera pixels which have no input lidar or Anchor point measurement associated (inferred distance 25 between reflection 20 and reflection 21). Outside of the limited effective range 26 (and corresponding lidar coverage 27) of the short-range lidar the Anchor Points 28 are the reference for calibrating relative distances in the scene (measured distance 29 between reflection 20 and reflection 22). Typical Depth Estimation does not have reference points to calibrate the distance estimations thus is very inaccurate, giving only a general high-level relative shape or relative structure of the scene. Thus, in the invention's range extension setup the remaining unseen area by neither the input lidar, neither the long-range beam sensor can be reconstructed with high accuracy using anchor points 28 and the long-range ground truth measurements available.

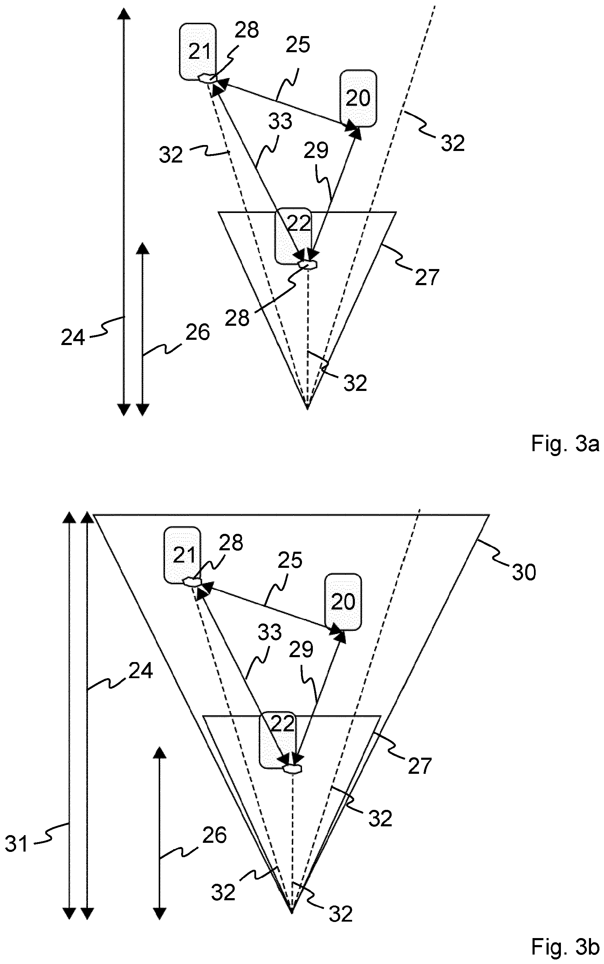

In case of a complementary sensor with multiple beams 32, the training is done in such a way to optimize the accuracy of the predicted distance between the closest observed anchor point (as shown in Fig. 3). The Neural Network's optimization is done by searching in the parameter space a set of weights that minimize the error between the predicted 3D points and the detailed long-range information provided by the recording setup's long-range lidar unit thus comparing inferred distances of the inference setup to measurable distances 29, 33 in the recording setup. The Neural Network's backbone architecture can be Convolutional Neural Network in an autoencoder setup e.g. U-Net or more modern versions. The current invention's scope is not the performance enhancement of the backbone's internal structure, but rather the setup and steps described above. The invention's production vehicle setup emulates a long-range lidar unit with the above detailed fusion methodology running real-time in the production vehicle.

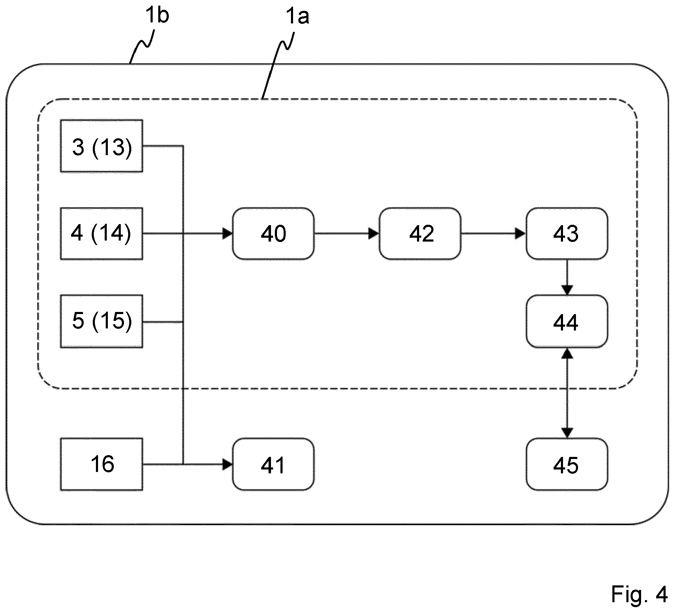

Unclaimed embodiments of this invention refer to a computer program that can be executed on one or more GPUs (General Processing Units), CPUs (Computer Processing Units) or dedicated Neural Network accelerators, together with a described vehicle sensor setup. One embodiment of the invention can have a single-beam long-range lidar unit as a complementary long-range but ultra-low resolution sensor. Thus e.g. flash lidar and single beam long-range lidar and camera fusion is done in inference time in the vehicle. A similar beam lidar unit could be used (but a long-range version instead of short-range infrared sensor). Both the flash lidar and the long-range single beam lidar or all three sensors together with the camera could be integrated into a single physical sensor system (the three sensors can be arranged in one physical housing) so called long-range ground truth lidar 16 as shown in Fig. 4, wherein both first sensor setup (production vehicle 1a) and second sensor setup (training vehicle 1b) is shown. It is preferred that the camera, the flash lidar and the single-beam long-range lidar have the same frame rate (preferably designing to match the frame rate of the Flash lidar). According to a preferred design the camera and the flash lidar frame rate synchronization is already carried out in the factory process. In addition, the long-range radar 4 (or 14) can also be a long-range lidar sensor. Furthermore Fig. 4 shows an example of method steps for processing the sensor data: In steps 40 and 41 the sensor data is transformed to a common coordinate system. In step 42 the data of the coordinate system is projected to camera plane and further concatenated (Concatenation 43) for a depth prediction by neural network for all camera pixels (step 44). Furthermore, supervised learning optimization 45 can also be used for step 44 or step 44 can be used to improve the supervised learning optimization 45. Another, alternative embodiment of the invention can use a long-range radar with a single or multiple beams as a complementary long-range but ultra-low resolution sensor. Thus e.g. flash lidar, long-range radar and camera fusion is also done in inference time in the vehicle.

All in all as a preferred embodiment the production vehicle setup comprises a short-range lidar and an additional "single beam lidar" or similar (2-5 beams), a main lidar to extend the short-range, like a high flash lidar (e.g. with an effective range up to 20 m with 4096 points) and a complementary long-range "single static beam" lidar (could be more than one beam, but "low beam count individual static beam"; e.g. 1-5 up to the desired range extension, e.g. 40 m, 60 m, 80 m, 100 m) individual static beams (or a radar sensor, which also typically has one beam or up to a few beams only). A preferred Embodiment for recording vehicle setup comprises all sensors of the production vehicle setup and a long-range dense ground truth lidar, e.g. with an effective range up to 120 m with dense points (for example this sensor comprises rotating multiple beams, so called "scanning lidar" and also a long-range). In the end the recoding vehicle having all named types of sensors, but the production vehicle having only the "single beam" (or low number individual static non-moving point beams) and the high flash lidar, wherein the range of the long-range dense ground truth lidar can be emulated, for which the single long-range beam helps by having just a few (1-3) long-range point measurements (anchor points) to calibrate the prediction of distances outside of the high flash lidars 20 m range.

### REFERENCE NUMBERS

- 1: Production vehicle
- 2: Control unit
- 3: Short-range lidar sensor
- 4: Long-range radar sensor
- 5: Camera
- 11: Training vehicle
- 12: Control unit
- 13: Short-range lidar sensor
- 14: Long-range radar sensor
- 15: Camera
- 16: Long-range ground truth lidar sensor
- 20: Reflection
- 21: Reflection
- 22: Reflection
- 23: Single radar (or lidar) beam
- 24: Effective range of long-range auxiliary sensor
- 25: Distance (between reflections 20 and 21)
- 26: Effective range of short-range lidar
- 27: Coverage of short-range lidar
- 28: Anchor point
- 29: Distance (between reflections 20 and 22)
- 30: Coverage of long-range ground truth sensor
- 31: Detection range of long-range ground truth sensor
- 32: Multi radar (or lidar) beams
- 33: Distance (between reflections 21 and 22 or between two anchor points)
- 40: Transformation to common coordinate system
- 41: Transformation to common coordinate system
- 42: Projection to camera plane
- 43: Concatenation
- 44: Depth prediction
- 45: Supervised learning optimization

## Claims

1. A method for extending the detection range of a short-range sensor, wherein the method comprises
a first sensor setup for a production vehicle (1), comprising:
- a short-range sensor (3),
- a long-range auxiliary sensor (4) which provides an anchor point measurement, and
a second sensor setup for a training vehicle (11), comprising:
- a short-range sensor (13),
- a long-range auxiliary sensor (14) which provides an anchor point measurement,
- a long-range ground truth sensor (16), wherein
the sensors of the first and second sensor setup having a sensor range and providing sensor data for reflection detection,
the range extension is done with a neural network, wherein
the neural network is trained using the following steps:
- Detecting reflections (20, 21, 22) in the surrounding of the training vehicle (11) by using sensor data of the second sensor setup
- Determining an anchor point (28) of a reflection (21) which is out of a detection range (26) of the short-range sensor (13) of the second sensor setup by using the anchor point measurement of the long-range auxiliary sensor (14) of the second sensor setup,
- Providing ground truth by determining the distances (25, 33) between the anchor point (28) and the other reflections (20, 22) by using the sensor data of the long-range ground truth sensor (16), and
the method is executed on basis of the neural network using the following steps
- Detecting reflections (20, 21, 22) in the surrounding of the production vehicle (1) by using sensor data of the first sensor setup,
- Determining anchor points (28) of a reflection (20, 21) by using the anchor point measurement of the long-range auxiliary sensor (4) of the first sensor setup,
- Determining the distances (33) between the anchor points (28) and other reflections (22) in the detection range of the short-range sensor (3) of the first sensor setup by using the sensor data of the short-range sensor (3) of the first sensor setup, and
- Inferring the distances (25) between the anchor points (28) and other reflections (20) out of the detection range of the short-range sensor (3) of the first sensor setup by using the provided ground truth of the trained neural network.

2. The method according to Claim 1, **characterized in that** the short-range sensor in the first and/or the second sensor setup is a short-range lidar sensor or a short-range flash lidar sensor (3, 13).

3. The method according to Claim 1 or 2, **characterized in that** the long-range auxiliary sensor which provides an anchor point measurement in the first and/or the second sensor setup is a radar sensor (4, 14) or a long-range lidar sensor.

4. The method according to one of the preceding claims, **characterized in that** the long-range auxiliary sensor (4, 14) comprises a single-beam or a multi-beam configuration.

5. The method according to one of the preceding claims, **characterized in that** the first sensor setup and/or the second sensor setup comprising a camera (5, 15), wherein the camera (5, 15) provides images and/or pixels as sensor data which are also used as input for the neural network.

6. The method according to claim 5, **characterized in that** the neural network infers the location of camera (5, 15) pixels which have no other input sensor data or anchor point measurement associated.

7. The method according to one of the preceding claims, **characterized in that** the long-range ground truth sensor is a long-range ground truth lidar sensor (16).

8. The method according to one of the preceding claims, **characterized in that** a sensor fusion of sensor data of the sensors of the first sensor setup is done

9. A production vehicle (1) with a short-range sensor (3), a long-range auxiliary sensor (4) and a control unit (2), wherein the production vehicle (1) is adapted to extend a detection range of the short-range sensor (3) based on a method according to one of the preceding claims.

10. The production vehicle (1) according to claim 9, **characterized in that** the short-range sensor is a short-range lidar sensor or a short-range flash lidar sensor (3) and the long-range auxiliary sensor is a radar sensor (4) or a long-range lidar sensor.

11. The production vehicle (1) according to claim 9 or 10, **characterized in that** the production vehicle (1) comprises a camera (5), wherein the camera (5) provides images and/or pixels as sensor data for object detection.

12. The production vehicle (1) according to claim 11, **characterized in that** the sensors of the first sensor setup are arranged together with the corresponding camera (5) in one housing.

13. The production vehicle (1) according to claim 11 or 12, **characterized in that** the short-range lidar sensor (3) and/or the long-range lidar sensor and/or the camera (5) having the same frame rate.

## Patentansprüche

1. Verfahren zum Erweitern des Detektionsbereichs eines Kurzbereichssensors, wobei das Verfahren Folgendes umfasst
eine erste Sensoreinrichtung für ein Produktionsfahrzeug (1), die Folgendes umfasst:
- einen Kurzbereichssensor (3),
- einen Weitbereichszusatzsensor (4), der eine Verankerungspunktmessung bereitstellt, und
eine zweite Sensoreinrichtung für ein Trainingsfahrzeug (11), die Folgendes umfasst:
- einen Kurzbereichssensor (13),
- einen Weitbereichszusatzsensor (14), der eine Verankerungspunktmessung bereitstellt,
- einen Weitbereichsgrundwahrheitssensor (16), wobei
die Sensoren der ersten und der zweiten Sensoreinrichtung einen Sensorbereich aufweisen und Sensordaten für eine Reflexionsdetektion bereitstellen,
die Bereichserweiterung mit einem neuronalen Netzwerk erfolgt, wobei das neuronale Netzwerk unter Verwendung der folgenden Schritte trainiert wird:
- Detektieren von Reflexionen (20, 21, 22) in der Umgebung des Trainingsfahrzeugs (11) unter Verwendung von Sensordaten der zweiten Sensoreinrichtung.
- Bestimmen eines Verankerungspunkts (28) einer Reflexion (21), der außerhalb eines Detektionsbereichs (26) des Kurzbereichssensors (13) der zweiten Sensoreinrichtung liegt, unter Verwendung einer Verankerungspunktmessung des Weitbereichszusatzsensors (14) der zweiten Sensoreinrichtung,
- Bereitstellen einer Grundwahrheit durch Bestimmen der Abstände (25, 33) zwischen dem Verankerungspunkt (28) und den anderen Reflexionen (20, 22) unter Verwendung der Sensordaten des Weitbereichsgrundwahrheitssensors (16) und das Verfahren auf Basis des neuronalen Netzwerks unter Verwendung der folgenden Schritte ausgeführt wird:
- Detektieren von Reflexionen (20, 21, 22) in der Umgebung des Produktionsfahrzeugs (1) unter Verwendung von Sensordaten der ersten Sensoreinrichtung,
- Bestimmen von Verankerungspunkten (28) einer Reflexion (20, 21) unter Verwendung der Verankerungspunktmessung des Weitbereichszusatzsensors (4) der ersten Sensoreinrichtung,
- Bestimmen der Abstände (33) zwischen den Verankerungspunkten (28) und anderen Reflexionen (22) im Detektionsbereich des Kurzbereichssensors (3) der ersten Sensoreinrichtung unter Verwendung der Sensordaten des Kurzbereichssensors (3) der ersten Sensoreinrichtung und
- Ableiten der Abstände (25) zwischen den Verankerungspunkten (28) und anderen Reflexionen (20) außerhalb des Detektionsbereichs des Kurzbereichssensors (3) der ersten Sensoreinrichtung unter Verwendung der bereitgestellten Grundwahrheit des trainierten neuronalen Netzwerks.

2. Verfahren nach Anspruch 1, **dadurch gekennzeichnet, dass** der Kurzbereichssensor in der ersten und/oder der zweiten Sensoreinrichtung ein Kurzbereichs-Lidarsensor oder ein Kurzbereichs-Flash-Lidarsensor (3, 13) ist.

3. Verfahren nach Anspruch 1 oder 2, **dadurch gekennzeichnet, dass** der Weitbereichszusatzsensor, der eine Verankerungspunktmessung in der ersten und/oder der zweiten Sensoreinrichtung bereitstellt, ein Radarsensor (4, 14) oder ein Weitbereichs-Lidarsensor ist.

4. Verfahren nach einem der vorhergehenden Ansprüche, **dadurch gekennzeichnet, dass** der Weitbereichszusatzsensor (4, 14) eine Einzelstrahl- oder eine Mehrstrahlauslegung umfasst.

5. Verfahren nach einem der vorhergehenden Ansprüche, **dadurch gekennzeichnet, dass** die erste Sensoreinrichtung und/oder die zweite Sensoreinrichtung eine Kamera (5, 15) umfasst, wobei die Kamera (5, 15) Bilder und/oder Pixel als Sensordaten bereitstellt, die auch als eine Eingabe für das neuronale Netzwerk verwendet werden.

6. Verfahren nach Anspruch 5, **dadurch gekennzeichnet, dass** das neuronale Netzwerk den Standort von Kamera(5, 15)-Pixeln ableitet, die keine anderen Eingangssensordaten und keine verknüpfte Verankerungspunktmessung aufweisen.

7. Verfahren nach einem der vorhergehenden Ansprüche, **dadurch gekennzeichnet, dass** der Weitbereichsgrundwahrheitssensor ein Weitbereichsgrundwahrheits-Lidarsensor (16) ist.

8. Verfahren nach einem der vorhergehenden Ansprüche, **dadurch gekennzeichnet, dass** aus Sensordaten der Sensoren der ersten Sensoreinrichtung eine Sensorfusion erfolgt.

9. Produktionsfahrzeug (1) mit einem Kurzbereichssensor (3), einem Weitbereichszusatzsensor (4) und einer Steuereinheit (2), wobei das Produktionsfahrzeug (1) angepasst ist, einen Detektionsbereich des Kurzbereichssensors (3) auf Basis eines Verfahrens nach einem der vorhergehenden Ansprüche zu erweitern.

10. Produktionsfahrzeug (1) nach Anspruch 9, **dadurch gekennzeichnet, dass** der Kurzbereichssensor ein Kurzbereichs-Lidarsensor oder ein Kurzbereichs-Flash-Lidarsensor (3) ist und der Weitbereichszusatzsensor ein Radarsensor (4) oder ein Weitbereichs-Lidarsensor ist.

11. Produktionsfahrzeug (1) nach Anspruch 9 oder 10, **dadurch gekennzeichnet, dass** das Produktionsfahrzeug (1) eine Kamera (5) umfasst, wobei die Kamera (5) Bilder und/oder Pixel als Sensordaten für eine Objektdetektion bereitstellt.

12. Produktionsfahrzeug (1) nach Anspruch 11, **dadurch gekennzeichnet, dass** die Sensoren der ersten Sensoreinrichtung zusammen mit der entsprechenden Kamera (5) in einem Gehäuse angeordnet sind.

13. Produktionsfahrzeug (1) nach Anspruch 11 oder 12, **dadurch gekennzeichnet, dass** der Kurzbereichs-Lidarsensor (3) und/oder der Weitbereichs-Lidarsensor und/oder die Kamera (5) dieselbe Bildfrequenz aufweisen.

## Revendications

1. Procédé d'extension de la portée de détection d'un capteur à courte portée, le procédé comprenant :
une première configuration de capteurs pour un véhicule de production (1), comprenant :
- un capteur à courte portée (3),
- un capteur auxiliaire à longue portée (4) qui fournit une mesure de point d'ancrage, et
une seconde configuration de capteurs pour un véhicule de formation (11), comprenant :
- un capteur à courte portée (13),
- un capteur auxiliaire à longue portée (14) qui fournit une mesure de point d'ancrage,
- un capteur de réalité de terrain à longue portée (16),
les capteurs des première et seconde configurations de capteurs ayant une portée de capteur et fournissant des données de capteur pour une détection de réflexion, l'extension de portée étant réalisée à l'aide d'un réseau neuronal, le réseau neuronal étant formé au moyen des étapes suivantes consistant à :
- détecter des réflexions (20, 21, 22) dans l'environnement du véhicule de formation (11) au moyen de données de capteur de la seconde configuration de capteurs,
- déterminer un point d'ancrage (28) d'une réflexion (21) qui se trouve hors de la portée de détection (26) du capteur à courte portée (13) de la seconde configuration de capteurs au moyen de la mesure de point d'ancrage du capteur auxiliaire à longue portée (14) de la seconde configuration de capteurs,
- fournir une réalité de terrain en déterminant les distances (25, 33) entre le point d'ancrage (28) et les autres réflexions (20, 22) au moyen des données de capteur du capteur de réalité de terrain à longue portée (16), le procédé étant exécuté sur la base du réseau neuronal au moyen des étapes suivantes consistant à :
- détecter des réflexions (20, 21, 22) dans l'environnement du véhicule de production (1) au moyen de données de capteur de la première configuration de capteurs,
- déterminer des points d'ancrage (28) d'une réflexion (20, 21) au moyen de la mesure de point d'ancrage du capteur auxiliaire à longue portée (4) de la première configuration de capteurs,
- déterminer les distances (33) entre les points d'ancrage (28) et d'autres réflexions (22) dans la portée de détection du capteur à courte portée (3) de la première configuration de capteurs au moyen des données de capteur du capteur à courte portée (3) de la première configuration de capteurs, et
- déduire les distances (25) entre les points d'ancrage (28) et d'autres réflexions (20) hors de la portée de détection du capteur à courte portée (3) de la première configuration de capteurs au moyen de la réalité de terrain fournie du réseau neuronal formé.

2. Procédé selon la revendication 1, **caractérisé en ce que** le capteur à courte portée dans la première et/ou la seconde configuration de capteurs est un capteur lidar à courte portée ou un capteur lidar à flash à courte portée (3, 13).

3. Procédé selon la revendication 1 ou 2, **caractérisé en ce que** le capteur auxiliaire à longue portée qui fournit une mesure de point d'ancrage dans la première et/ou la seconde configuration de capteurs est un capteur radar (4, 14) ou un capteur lidar à longue portée.

4. Procédé selon l'une quelconque des revendications précédentes, **caractérisé en ce que** le capteur auxiliaire à longue portée (4, 14) comprend une configuration monofaisceau ou multifaisceau.

5. Procédé selon l'une quelconque des revendications précédentes, **caractérisé en ce que** la première configuration de capteurs et/ou la seconde configuration de capteurs comprend une caméra (5, 15), la caméra (5, 15) fournissant des images et/ou des pixels en tant que données de capteur qui sont également utilisées en tant qu'entrée pour le réseau neuronal.

6. Procédé selon la revendication 5, **caractérisé en ce que** le réseau neuronal déduit l'emplacement de pixels de la caméra (5, 15) auxquels n'est associée aucune autre donnée de capteur d'entrée ou mesure de point d'ancrage.

7. Procédé selon l'une quelconque des revendications précédentes, **caractérisé en ce que** le capteur de réalité de terrain à longue portée est un capteur lidar de réalité de terrain à longue portée (16).

8. Procédé selon l'une quelconque des revendications précédentes, **caractérisé en ce qu'**une fusion de capteur de données de capteur des capteurs de la première configuration de capteurs est effectuée.

9. Véhicule de production (1) muni d'un capteur à courte portée (3), d'un capteur auxiliaire à longue portée (4) et d'une unité de commande (2), le véhicule de production (1) étant conçu pour étendre une portée de détection du capteur à courte portée (3) sur la base d'un procédé selon l'une quelconque des revendications précédentes.

10. Véhicule de production (1) selon la revendication 9, **caractérisé en ce que** le capteur à courte portée est un capteur lidar à courte portée ou un capteur lidar à flash à courte portée (3) et le capteur auxiliaire à longue portée est un capteur radar (4) ou un capteur lidar à longue portée.

11. Véhicule de production (1) selon la revendication 9 ou 10, le véhicule de production (1) étant **caractérisé en ce qu'**il comprend une caméra (5), la caméra (5) fournissant des images et/ou des pixels en tant que données de capteur pour la détection d'objets.

12. Véhicule de production (1) selon la revendication 11, **caractérisé en ce que** les capteurs de la première configuration de capteurs sont agencés ensemble avec la caméra (5) correspondante dans un boîtier.

13. Véhicule de production (1) selon la revendication 11 ou 12, **caractérisé en ce que** le capteur lidar à courte portée (3) et/ou le capteur lidar à longue portée et/ou la caméra (5) ont la même fréquence d'images.
